# FASCICULE DE BREVET EUROPEEN

(11) **EP 0 516 542 B1**
(45) Date de publication et mention de la délivrance du brevet: **05.07.1995**
(21) Numéro de dépôt: 92401458.2
(22) Date de dépôt: 27.05.1992
(51) Int. Cl.: G21C 3/322, G21C 3/332

(54) **Grille thermohydraulique et assemblage combustible nucléaire en comportant application**
Thermohydraulisches Gitter und seine Anwendung in einem Kernbrennstobbündel
Thermohydraulic grid and its application in a nuclear fuel assembly

(30) Priorité: 30.05.1991 FR 9106524
(43) Date de publication de la demande: 02.12.1992
(73) Titulaire: FRAMATOME, 92400 Courbevoie (FR); COMPAGNIE GENERALE DES MATIERES NUCLEAIRES (COGEMA), 78141 Vélizy-Villacoublay (FR)
(72) Inventeur: Canat, Jean-Noel, F-69005 Lyon (FR); Petit, Bernard, F-69230 St Genis-Laval (FR)
(74) Mandataire: Fort, Jacques

(56) Documents cités:
- EP-A- 0 148 452
- EP-A- 0 261 544
- FR-A- 2 517 868
- FR-A- 2 633 436
- GB-A- 2 021 303

## Description

La présente invention a pour objet une grille thermohydraulique de mélange pour assemblage combustible nucléaire, cette grille ayant pour fonction d'améliorer le mélange des filets de réfrigérant en circulation dans l'assemblage et d'homogénéiser les températures et étant destinée à être intercalée entre des grilles constituant des éléments de la structure de l'assemblage.

L'invention trouve une application particulièrement importante dans les assemblages combustibles pour réacteur à eau sous pression comprenant une structure de support ayant deux embouts reliés par des tubes guides et ayant des grilles de maintien de crayons de combustible réparties le long de l'assemblage, chaque grille de maintien ayant au moins deux jeux de plaquettes entrecroisées et une ceinture extérieure délimitant des cellules traversées les unes par des tubes guides et les autres par des crayons, les plaquettes étant munies de moyens de maintien des crayons aux noeuds d'un réseau régulier et étant fixées à certains au moins des tubes guides, certaines grilles au moins (celles placées en aval dans le sens de l'écoulement) étant munies d'ailettes de mélange des filets de réfrigérant.

Une au moins des grilles de maintien assure de plus le supportage des crayons. Pour cela, elle est habituellement munie de ressorts, découpés dans les plaquettes ou rapportés sur les plaquettes, destinés à plaquer les crayons sur des bossettes embouties dans les plaquettes formant d'autres faces de la cellule.

Les autres grilles de maintien n'ont qu'une fonction de centrage des crayons aux noeuds du réseau. Elles comportent pour cela, sur chaque face de chaque cellule traversée par un crayon, des bossettes d'appui du crayon.

Pour augmenter les échanges thermiques entre les crayons et le réfrigérant et homogénéiser les températures à chaque niveau, on a déjà proposé d'insérer une grille supplémentaire de mélange, dans un ou plusieurs des intervalles compris entre deux grilles de maintien.

On connaît des grilles de mélange pour assemblage nucléaire, conformes au préambule de la revendication 1, munies d'une ceinture portant des ailettes de guidage, reliée à certains au moins des tubes guides (EP-A-0 148 452).

On a également proposé des grilles de mélange à plaquettes internes de faible hauteur, munies d'ailettes, ayant une ceinture. La ceinture doit alors être constituée en plaquettes externes épaisses et/ou plus hautes que les plaquettes internes, ce qui augmente l'absorption neutronique et les pertes de charge ; en effet la ceinture doit être suffisamment robuste pour ne pas se déformer lorsque deux grilles de deux assemblages adjacents se heurtent ou en cas de séisme.

On a tenté d'écarter le problème (EP-A-0 261 544) en utilisant des grilles additionnelles démunies de ceinture, constituées de plaquettes plates, fixées aux tubes guides et délimitant des cellules de dimensions telles que les crayons les traversent avec un jeu.

De telles grilles intermédiaires présentent des inconvénients. Elles ne participent pas au maintien des crayons. Les canaux périphériques n'ont pas de moyens de mélange des filets de liquide et sont moins refroidis que les canaux internes, d'où un risque de surchauffe.

La présente invention vise notamment à fournir une grille thermohydraulique répondant mieux que celles antérieurement connues aux exigences de la pratique, notamment en ce qu'elle assure un mélange homogène sans pour autant présenter les inconvénients des grilles additionnelles à ceinture antérieures, dont la ceinture est renforcée pour résister aux chocs.

Dans ce but l'invention propose une grille thermohydraulique suivant la revendication 1.

Les ailettes de guidage, pratiquement nécessaires pour faciliter l'insertion et l'enlèvement des assemblages, assurent un brassage qui compense l'absence d'ailettes de mélange dans les canaux périphériques. On peut réserver, entre les plaquettes et les tubes guides liés à la ceinture, un jeu suffisant pour autoriser, entre jeux de plaquettes et ceinture, un débattement tel qu'un choc provoquant la ruine de la ceinture n'endommage pas les plaquettes et n'ait pas d'effet sur la géométrie du réseau des crayons.

On peut en conséquence donner à la ceinture une hauteur faible, de l'ordre du centimètre par exemple et/ou la constituer en tôle de même épaisseur que les plaquettes, moins épaisse que dans les grilles de structure.

Chaque plaquette peut être munie de bossettes en saillie sur chacune des faces des cellules internes pour limiter le débattement des crayons et peut avoir une longueur telle que l'encombrement en plan de la grille soit inférieur à celui de l'enveloppe des crayons.

Les grilles additionnelles seront généralement constituées en un alliage à base de zirconium, donc a faible absorption neutronique, tel que l'un de ceux connus sous le nom de "zircaloy".

L'invention propose également un assemblage combustible dont la structure comporte, en plus d'embouts d'extrémité, de tubes guides de liaison des embouts et de grilles de supportage et de maintien de crayons ayant une ceinture, au moins une grille additionnelle placée entre deux grilles de maintien, du type défini plus haut.

L'invention sera mieux comprise à la lecture de la description qui suit d'un mode particulier de réalisation de l'invention, donné à titre d'exemple non limitatif. La description se réfère aux dessins qui l'accompagnent, dans lesquels :
- la figure 1 est une vue schématique en élévation montrant une répartition de grilles dans un assemblage combustible pour réacteur à eau sous pression ;
- la figure 2 est une vue en perspective montrant un fragment d'une grille thermohydraulique de mélange et de maintien selon un mode particulier de réalisation de l'invention ;
- les figures 3 et 4, similaires à la figure 2, montrent des variantes de réalisation.

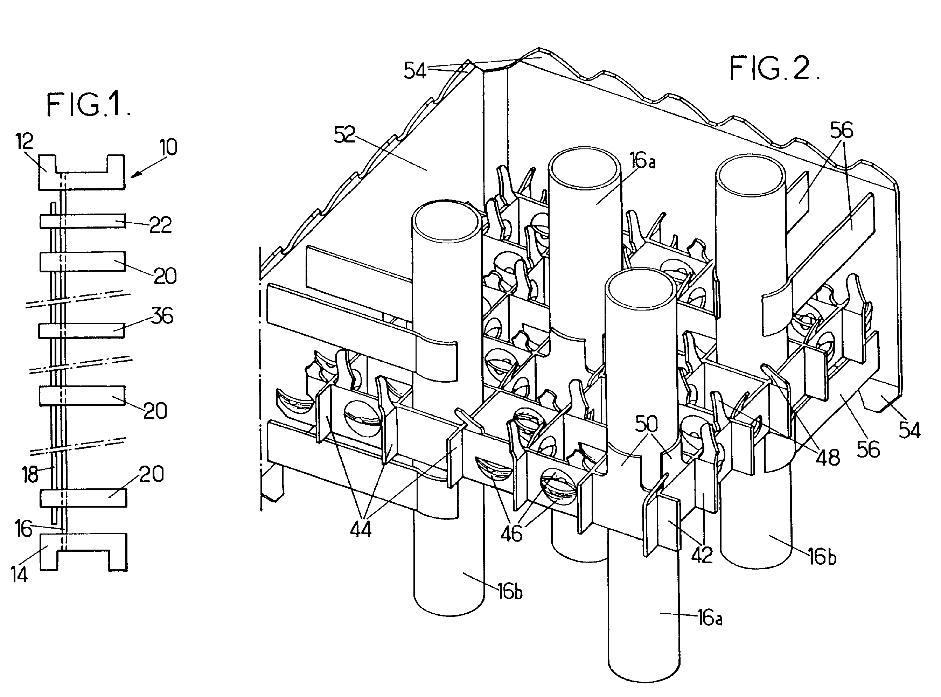

Une grille suivant l'invention est notamment utilisable dans un assemblage combustible 10 du genre montré en figure 1. Cet assemblage 10 comporte une structure ayant deux embouts ou pièces d'extrémité 12 et 14 reliés par des tubes guides 16 destinés à recevoir les crayons d'une grappe de commande non représentée. Des grilles de maintien de crayon de combustible 18, dont un seul est représenté, sont réparties à intervalles le long des tubes guides et sont fixées à certains au moins de ces tubes guides 16.

Parmi les grilles, certaines, désignées par là référence 20, peuvent n'avoir qu'une fonction de maintien et de centrage des crayons 18 aux noeuds d'un réseau, généralement carré. Elles sont généralement constituées de deux jeux entrecroisés de plaquettes dans lesquels sont ménagés des bossages d'appui des crayons. Les grilles 20, ou au moins celles qui sont situées le plus en aval dans le sens de l'écoulement (ascendant en général), peuvent être munies d'ailettes de création de turbulences ou d'écoulements transversaux. La retenue longitudinale des crayons peut être assurée par une seule grille 22, munie dans ce but de ressorts d'appui des crayons contre des bossettes, découpés dans les plaquettes ou rapportés.

On connait déjà un assemblage du genre montré en figure 1 dans lequel les grilles 20 de maintien sont en alliage en base de zirconium et la grille unique 22 de supportage des crayons est en alliage à résistance mécanique élevée, tel que l'Inconel.

Au moins à la partie aval d'un assemblage suivant l'invention, deux grilles de maintien 20 successives sont séparées par une grille additionnelle thermohydraulique 36 pourvue d'ailettes de mélange 48 et pouvant notamment avoir l'une des constitutions montrées en figure 2, 3 et 4. La grille additionnelle comprend deux jeux de plaquettes entrecroisées 42 et 44 munies de bossages 46. Les bossages 46 représentés à titre d'exemple sont constitués par des crevés en forme de demi-calotte faisant saillie dans chacune des cellules destinées à recevoir un crayon de combustible. Ces bossages évitent notamment que les crayons de combustible viennent en contact avec les ailettes de mélange 48. L'avancée des bossages par rapport à la partie courante des plaquettes peut être telle qu'ils laissent subsister un jeu diamétral permettant aux crayons combustibles 18 de coulisser librement. Deux bossettes adjacentes peuvent être formées en pratiquant une fente le long de la ligne médiane de la plaquette et en déformant en sens opposés la plaquette au-dessus et au-dessous de la fente.

La longueur des plaquettes peut être telle que l'encombrement en plan de l'entrecroisement soit inscrit à l'intérieur de l'enveloppe virtuelle des crayons 18.

Les plaquettes sont fixées les unes aux autres, par exemple par soudage à leurs points de croisement. Elles peuvent être en feuillard mince, d'environ 0,5 mm d'épaisseur par exemple, assemblées à mi-fer.

L'entrecroisement de plaquettes de la grille de la figure 2 est fixé à certains 16a des tubes guides. Pour cela la tranche aval des plaquettes qui encadrent ces tubes est prolongée, autour des cellules destinées au passage des tubes guides 16a, par des languettes 50 destinées à être soudées, par exemple par résistance, à ces tubes guides.

La grille comporte une ceinture 52 qui entoure l'entrecroisement de plaquettes en laissant subsister un jeu radial, autour de l'enveloppe des crayons de combustible. La hauteur de la ceinture montrée à titre d'exemple en figure 2 est supérieure à celle des plaquettes. Cependant, l'absorption neutronique de cette ceinture peut être faible, car, du fait qu'elle est indépendante de l'entrecroisement elle peut être constituée en matériau mince, par exemple en feuillard ayant la même épaisseur que celle des plaquettes. Les tranches amont et aval de la ceinture 52 sont munies d'ailettes de guidage 54 destinées à éviter l'accrochage mutuel de deux grilles lors de l'insertion ou de l'enlèvement d'un assemblage. Ces ailettes de guidage 54, étant inclinées vers l'intérieur, provoquent également un brassage des filets de liquide réfrigérant, évitant un sous-refroidissement des crayons de combustible placés au bord. La ceinture est fixée à certains des tubes guides, généralement aux tubes guides placés les plus près de la ceinture. Dans le cas montré en figure 2, la ceinture est fixée aux tubes guides 16b qui n'ont pas de liaison avec l'entrecroisement de plaquettes. Des moyens de fixation sont avantageusement prévus de part et d'autre de l'entrecroisement dans le sens vertical. Dans le cas illustré sur la figure 2, la ceinture est fixée sur chacun des tubes guides 16b par deux paires de pattes 56 placées l'une au-dessus et l'autre au-dessous de l'entrecroisement. Ces pattes 56 peuvent être constituées en tôle d'alliage à base de zirconium de même épaisseur que la ceinture 52. Elles peuvent être fixées à la ceinture par engagement de tenons qu'elles portent dans des fentes ménagées dans la ceinture et par soudage. Les pattes peuvent être soudées sur les tubes guides 16b par résistance.

Dans la pratique, on peut fixer l'entrecroisement de plaquettes 42 et 44 sur la moitié des tubes guides environ et fixer la ceinture périphérique 52 à l'autre moitié des tubes guides. Grâce à l'utilisation de pattes éloignées les l'unes des autres dans le sens longitudinal, le parallèlisme des parois de la ceinture 52 et des tubes guides 16b peut être maintenu fermement.

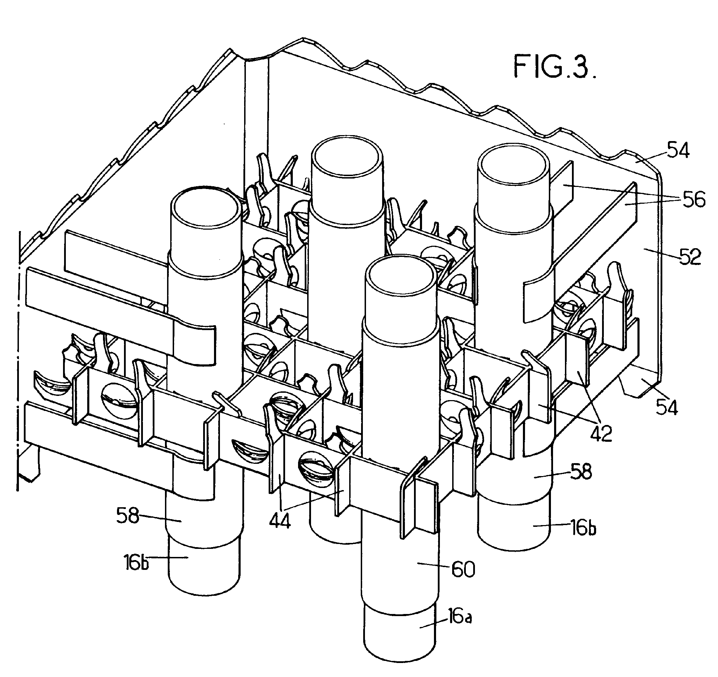

Dans la variante de réalisation montré en figure 3 (où les éléments correspondant à ceux de la figure 2 sont désignés par le même numéro de référence) la ceinture 52 n'est pas fixée directement sur les tubes guides 16b. Les pattes 56 appartenant à deux paires superposées sont fixées, par exemple par soudage, sur un manchon 58 enfilé sur un tube guide 16b. Les plaquettes 42 et 44 ne comportent pas de languettes. Elles sont enfilées ou fixées sur des manchons 60 similaires au manchon 58. Les manchons 58 et 60 peuvent être prévus pour coulisser à frottement doux sur les tubes guides respectifs. Il est possible de ne prévoir des manchons que sur les tubes guides qui sont raccordés à des pattes.

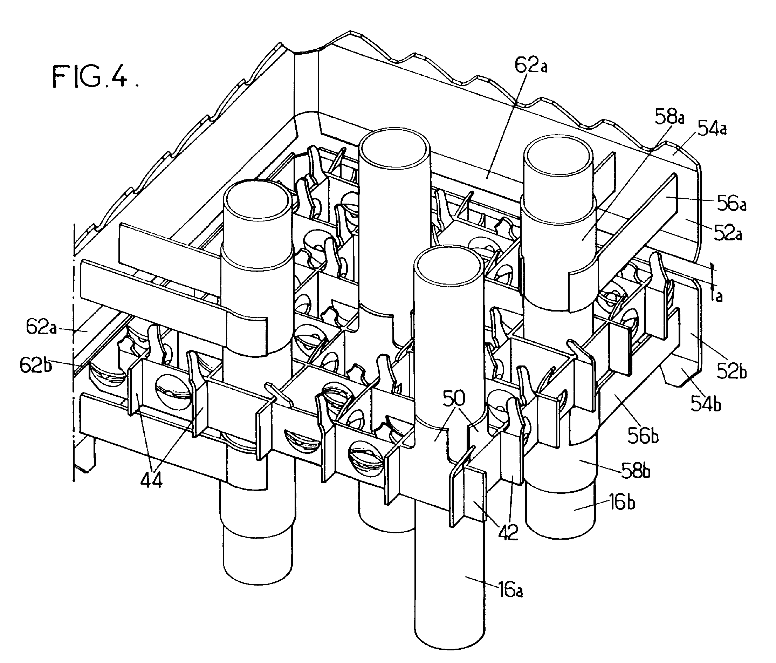

Enfin le mode de réalisation montré en figure 4 comporte deux demi-ceintures 52a et 52b, de constitution symétrique, placées chacune d'un côté de l'entrecroisement de plaquettes dans le sens longitudinal. La ceinture 52a est munie, sur son arête aval, d'ailettes de guidage 54a. Son bord amont est simplement replié pour constituer un plan incliné 62a évitant les risques d'accrochage. Cette demi-ceinture 52a est reliée, dans le mode de réalisation illustré, à des manchons courts 58a enfilés sur les tubes guides 16b. Dans ce cas les pattes 56a de fixation d'une demi-ceinture sont toutes au même niveau, ce qui ne présente pas d'inconvénient grave étant donné la faible dimension des demi-grilles dans le sens longitudinal. L'écartement a des demi-grilles sera généralement inférieur à la dimension de l'entrecroisement dans le sens longitudinal.

Les dispositions qui viennent d'être décrites peuvent être combinées et en particulier il est possible de fixer l'entrecroisement sur des tubes guides qui portent également la ceinture, bien que cette solution soit en générale moins favorable, du fait qu'elle réduit l'indépendance entre la ceinture et l'entrecroisement.

Les grilles suivant l'invention peuvent être fabriquées et montées de diverses façons.

Des grilles du genre montrées en figure 2 peuvent être réalisées en constituant à part des ensembles entrecroisement-ceinture qui sont soudés sur les tubes guides respectifs lors de la fabrication du squelette.

Dans le cas de la figure 3, les grilles constituent des sous-ensembles indépendants du squelette, qu'on peut mettre en place en les faisant glisser sur les tubes guides 16a et 16b avant de souder les manchons 58 et 60 sur les tubes guides respectifs par résistance ou par déformation.

Dans le cas représenté sur la figure 4, il est possible de monter les grilles successives au cours de la fabrication du squelette en mettant successivement en place et en soudant une des demi-ceintures munie de ses manchons, puis l'entrecroisement, puis l'autre demi-ceinture.

## Revendications

1. Grille thermohydraulique (36) de mélange pour assemblage combustible nucléaire, comprenant au moins deux jeux de plaquettes (42,44) munies d'ailettes de mélange (48), entrecroisées et fixées à leur point de croisement, délimitant des cellules destinées à être traversées les unes par des tubes guides (16a,16b) et les autres par des crayons de combustible, caractérisée en ce qu'elle est munie d'une ceinture (52) portant des ailettes de guidage (54), entourant les plaquettes (42,44) et indépendante des plaquettes, reliée à certains au moins des tubes guides (16b).

2. Grille selon la revendication 1, caractérisée en ce que les plaquettes ont une longueur telle que l'encombrement en plan de la grille soit à l'intérieur de l'enveloppe des crayons de combustible.

3. Grille selon la revendication 1 ou 2, caractérisée en ce que la ceinture (52) a des dimensions telles qu'elle laisse subsister un jeu radial autour de l'enveloppe virtuelle des crayons de combustible.

4. Grille selon la revendication 1, 2 ou 3, caractérisée en ce qu'elle comporte des pattes (56,56a,56b) de fixation sur des tubes guides respectifs (16b) placées de part et d'autre de l'entrecroisement des plaquettes dans le sens longitudinal.

5. Grille selon l'une quelconque des revendications 1 à 4, caractérisée en ce que l'entrecroisement de plaquettes (42,44) est fixé sur des tubes guides (16a) autres que les tubes guides (16b) sur lesquels est fixée la ceinture.

6. Grille selon l'une quelconque des revendications 1 à 5, caractérisée en ce que la ceinture (52) présente un développement dans le sens longitudinal supérieur à l'épaisseur de l'entrecroissement de plaquettes.

7. Grille selon l'une quelconque des revendications précédentes, caractérisée en ce que la ceinture (52) est fixée aux tubes guides respectifs (16b) par des pattes soudées (56) et des manchons (58) enfilés sur les tubes guides (16b).

8. Grille selon l'une quelconque des revendications 1 à 5, caractérisée en ce que la ceinture est fractionnée en deux demi-ceintures (52a,52b) encadrant l'entrecroisement de plaquettes dans le sens longitudinal et reliée chacune aux tubes guides respectifs (16b) ou à des manchons (58a,58b) par des pattes placées d'un seul côté de l'entrecroisement.

9. Grille selon la revendication 8, caractérisée en ce que chaque demi-ceinture comprend un repliement (62a,62b) du côté dirigé vers l'autre demi-ceinture et des ailettes de guidage et de mélange (54a,54b) du côté opposé.

10. Assemblage combustible dont la structure comporte, en plus d'embouts d'extrémité (12,14) de tubes guides (16) de liaison des embouts et de grilles (20,22) de supportage de maintien des crayons ayant une ceinture, au moins une grille additionnelle thermohydraulique placée entre deux grilles de maintien, caractérisé en ce que la-dite grille additionnelle thermohydraulique est conforme à l'une quelconque des revendications 1 à 9.

## Patentansprüche

1. Thermohydraulisches Mischgitter (36) für Kernbrennelementkassetten, das wenigstens zwei Sätzen von Platten (42, 44) umfaßt, die mit Mischfahnen (48) versehen, über Kreuz angeordnet und an ihrem Kreuzungspunkt befestigt sind und Zellen begrenzen, von denen die einen von Führungsrohren (16a, 16b) und die anderen von Brennstäben durchquert werden,
dadurch gekennzeichnet,
daß es mit einer Umfassung (52) versehen ist, die Führungsfahnen (54) trägt, die Platten (42, 44) umläuft und von diesen unabhängig ist und mit wenigstens manchen der Führungsrohre (16b) verbunden ist.

2. Gitter nach Anspruch 1, dadurch gekennzeichnet, daß die Platten eine solche Länge haben, daß die Ausdehnung des Gitters in der Ebene innerhalb der Umhüllenden der Brennstäbe liegt.

3. Gitter nach Anspruch 1 oder 2, dadurch gekennzeichnet, daß die Umfassung (52) so bemessen ist, daß sie ein radiales Spiel um die gedachte Umhüllung der Brennstäbe freiläßt.

4. Gitter nach Anspruch 1, 2 oder 3, dadurch gekennzeichnet, daß es Arme (56, 56a, 56b) jeweils zur Befestigung an Führungsrohren (16b) aufweist, die beiderseits des Kreuzungsbereichs der Platten in Längsrichtung angebracht sind.

5. Gitter nach einem der Ansprüche 1 bis 4, dadurch gekennzeichnet, daß der Kreuzungsbereich der Platten (42, 44) an anderen Führungsrohren (16a) befestigt ist, als jenen Führungsrohren (16b), an denen die Umfassung befestigt ist.

6. Gitter nach einem der Ansprüche 1 bis 5, dadurch gekennzeichnet, daß die Ausdehnung der Umfassung (52) in Längsrichtung größer ist als die Dicke des Kreuzungsbereichs der Platten.

7. Gitter nach einem der vorhergehenden Ansprüche, dadurch gekennzeichnet, daß die Umfassung (52) an den jeweiligen Führungsrohren (16b) durch geschweißte Arme (56) und auf die Führungsrohre (16b) aufgesteckte Hülsen (58) befestigt ist.

8. Gitter nach einem der Ansprüche 1 bis 5, dadurch gekennzeichnet, daß die Umfassung in zwei Halbumfassungen (52a, 52b) unterteilt ist, die den Kreuzungsbereich der Platten in Längsrichtung umfassen und von denen jede jeweils mit Führungsrohren (16b) oder Hülsen (58a, 58b) über Arme befestigt ist, die an nur einer Seite des Kreuzungsbereichs liegen.

9. Gitter nach Anspruch 8, dadurch gekennzeichnet, daß jede Halbumfassung an der der anderen Halbeinfassung zugewandten Seite einen abgewinkelten Bereich (62a, 62b) und an der gegenüberliegenden Seite Mischfahnen (54a, 54b) aufweist.

10. Brennelementkassette, deren Struktur zusätzlich zu Endstücken (12, 14), die Endstücke verbindenden Führungsrohren (16) und Traggittern (20, 22) zum Halten der Brennstäbe mit einer Einfassung wenigstens ein zwischen zwei Traggittern angeordnetes zusätzliches thermohydraulisches Gitter umfaßt,
dadurch gekennzeichnet,
daß das zusätzliche thermohydraulische Gitter einem der Ansprüche 1 bis 9 entspricht.

## Claims

1. Thermohydraulic mixing grid (36) for nuclear fuel assembly, comprising at least two sets of straps (42,44) fitted with mixing vanes (48), intersecting and fixed at their point of intersection, defining cells designed to be crossed some by thimble guides (16a,16b) and others by fuel rods, characterized in that it is provided with a surround (52) carrying guides vanes (54), surrounding the straps (42,44) and independent from the straps connected to at least some of the thimble guides (16b).

2. Grid as claimed in claim 1, characterized in that the straps have a length such that the plan view dimensions of the grid lie within the envelope of the fuel rods.

3. Grid as claimed in claim 1 or 2, characterized in that the surround (52) has dimensions such that it allows a radial clearance to subsist around the virtual envelope of the fuel rods.

4. Grid as claimed in claims 1, 2 or 3, characterized in that it comprises legs (56,56a,56b) for fixing to the respective thimble guides (16b) placed on both sides of the intersection of the straps, in the lengthwise direction.

5. Grid as claimed in any one of claims 1 to 4, characterized in that the intersected straps (42,44) are fixed to thimble guides (16a) other than the thimble guides (16b) to which the surround is fixed.

6. Grid as claimed in any of claims 1 to 5, characterized in that the surround (52) exhibits a development in the lengthwise direction greater than the thickness of the intersected straps.

7. Grid as claimed in any of the above claims, characterized in that the surround (52) is fixed to the respective thimble guides (16b) by welded brackets (56) and sleeves (58) slipped on the thimble guides (16b).

8. Grid according to any one of claims 1 to 5, characterized in that the surround is divided into two half-surrounds (52a,52b) straddling the intersected straps in the lengthwise direction and each connected to the respective thimble guides (16b) or to sleeves (58a,58b) by legs placed on a single side of the intersection.

9. Grid according to claim 8, characterized in that each half-surround comprises a bent section (62a, 62b) on the side directed towards the other half surround and guide and mixing vanes (54a,54b) on the opposite side.

10. Fuel assembly of which the structure comprises, in addition to nozzles (12,14), thimble guides (16) for connecting the nozzles and grids (20,22) to support the rods, having a surround, at least one additional thermohydraulic grid placed between two support grids, characterized in that said additional thermohydraulic grid is according to any one of claims 1 to 9.
